# EUROPEAN PATENT APPLICATION

(11) **EP 2 806 333 A1**
(43) Date of publication of application: **26.11.2014**
(21) Application number: 14169121.2
(22) Date of filing: 20.05.2014
(51) Int. Cl.: G06F 1/16, G06F 3/01, H04M 1/725, G06F 3/0346

(54) **Method and apparatus for executing applications in portable electronic devices**

(30) Priority: 21.05.2013 KR 20130056870
(71) Applicant: Samsung Electronics Co., Ltd, Gyeonggi-do 443-742 (KR)
(72) Inventor: Kim, Minchul, Gyeonggi-do 443-742 (KR); Woo, Seungsoo, Gyeonggi-do 443-742 (KR); Lee, Changho, Gyeonggi-do 443-742 (KR); Jung, Jeehye, Gyeonggi-do 443-742 (KR)
(74) Representative: Nederlandsch Octrooibureau

(57) **Abstract**

Disclosed herein are a method of executing an application in a portable electronic device. A notification is output on the portable electronice device and a movement or a rotation of the portable electronic device is detected. An application associated with the notification is executed in response to the movement or the rotation of the portable electronic device.

## Description

### BACKGROUND

### 1. Field

The present disclosure relates generally to a function of a portable electronic device, and more particularly, to a method and an apparatus for executing applications in a portable electronic device after a notification is received.

### 2. Description of the Prior Art

Due to recent remarkable developments in communication and semi-conductor technology, the spread and usage of portable electronic devices have increased significantly. In particular, the functionality of portable electronic devices has expaned into areas typically handled by traditional devices such that all functionality seems to be converging into these mobile devices. Such portable devices may, for example, transmit and receive text messages wirelessely, provide alarms, and provide simple voice communication interfaces. Meanwhile, as the functions performed by these portable electronic devices become more complex, a multitude of user functions may be performed simultaneously therein and a locking function may be provided for security, power savings, and the prevention of inadvertent operations.

Portable devices heretofore may promptly inform users of any received information with some type of notification. Such notification may be provided despite the device executing other functions or despite the device being locked. When the user recognizes the notification and wants to execute an application associated therewith, the user may have to search and touch an icon corresponding to the application. Such an icon may also be provided in the notification. The notification may also provide a menu image that the user may need to manipulate in order to access the associated application. Unfortunately, all these extra manual steps needed in order to access the application may be burdensome and inconvientent to a user.

### SUMMARY

In order to address the above problems, aspects of the present disclosure provide a method and an apparatus for seamlessely executing an application in a portable electronic device upon receipt of a notification.

In accordance with one aspect of the present disclosure, a method of executing an application in a portable electronic device may include: outputting a notification associated with an application in a portable electronic device; detecting a movement or a rotation of the portable electronic device; and when the movement or the rotation of the portable electronic device is detected, executing the application associated with the notification in response to the movement or the rotation of the portable electronic device.

In accordance with a further aspect of the present disclosure, a portable electronic device may include: a sensor unit; a display unit; and a controller configured to: control the display unit to output a notification associated with an application in the portable electronic device; detect with the sensor unit a movement or a rotation of the portable electronic device; and execute the application associated with the notification in response to the movement or the rotation of the portable electronic device, when the movement or the rotation of the portable electronic device is detected.

### BRIEF DESCRIPTION OF THE DRAWINGS

The features and advantages of the present disclosure will be more apparent from the following detailed description in conjunction with the accompanying drawings, in which:
FIG. 1 is a block diagram illustrating an example configuration of a portable electronic device in accordance with aspects of the present disclosure;
FIG. 2 is a flowchart illustrating an example application execution function in accordance with aspects of the present disclosure;
FIG. 3 illustrates a working example of tilting an illustrative electronic device and an example analysis of the angular velocity in accordance with aspects of the present disclosure;
FIG. 4 illustrates a working example of rotating a portable electronic device and turning the device in accordance with aspects of the present disclosure;
FIG. 5 is a flowchart illustrating an example application execution function in accordance with aspects of the present disclosure;
FIG. 6 is a flowchart illustrating a further application execution function in accordance with aspects of the present disclosure;
FIG. 7 is a further working example of an application execution function of a portable electronic device in accordance with aspects of the present disclosure;
FIG. 8 is an exemplary view illustrating an application execution function of a portable electronic device in accordance with aspects of the present disclosure; and
FIG. 9 is an exemplary view illustrating an application execution function of a portable electronic device in accordance with aspects of the present disclosure.

### DETAILED DESCRIPTION

Hereinafter, examples of the present disclosure will be described in detail with reference to the accompanying drawings. Here, portable electronic devices in accordance with aspects of the present disclosure may include any type of the information communication devices and multimedia devices, such as all of mobile communication terminals operated on the basis of communication protocols corresponding to various communication systems, Portable Multimedia Players (PMPs), digital broadcasting players, Personal Digital Assistants (PDAs), music reproducing devices (e.g., MP3 players), portable game terminals, smart phones, notebooks, hand-held PCs, or the like, and application devices thereof as well.

In describing the examples of the present disclosure, descriptions related to technical contents well-known in the art and contents not directly associated with the present disclosure, will be omitted. Moreover, detailed descriptions related to configuration elements having substantially identical configurations and functions will be omitted.

For the same reason, in the accompanying drawings, some configuration elements may be exaggerated, omitted, or schematically shown, and a size of each element may not precisely reflect the actual size. Accordingly, the present disclosure is not restricted by a relative size or interval shown in the accompanying drawings.

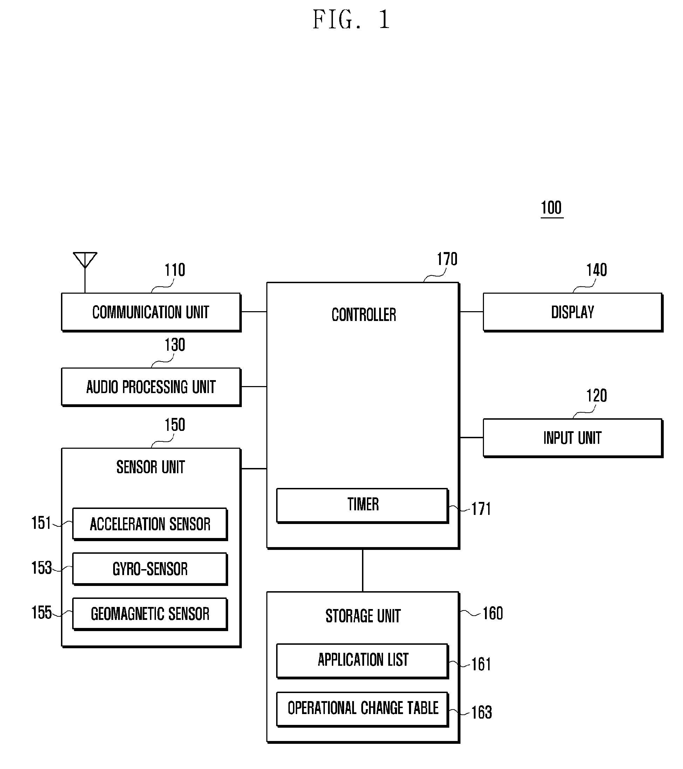

Referrring to FIG. 1 a block diagram illustrating an example portable electronic device supporting an application execution function in accordance with aspects of the present disclosure is shown. Portable electronic device 100 may include a communication unit 110, an input unit 120, an audio processing unit 130, a display 140, a sensor unit 150, a storage unit 160 and a controller 170. The portable electronic device 100 having the example configuration of FIG. 1 may receive a notification output from communication unit 110 or some applications stored therein, and may output a notification via display 140. In one example, a "notification" may be defined as a signal observable by a user such that the signal is generated in relation to a predetermined application. The notification may be for example a pop-up window, a notification bar, audio data, a vibration of a haptic module (not shown), or turning-on a light (not shown). In one example, after the notification is output, and a user tilts, rotates to the left or right, or turns the portable device 100, an acceleration sensor 151, a gyro-sensor 153 and a geomagnetic sensor 155 included in the sensor unit 150 of the portable electronic device 100 may detect the movement or rotation of the portable electronic device 100. As described above, the portable electronic device 100 may identify the movement or rotation of the portable electronic device 100 using at least one of the acceleration sensor 151, the gyro-sensor 153 and a geomagnetic sensor provided in the sensor unit 150, so that the portable electronic device 100 can allow an application corresponding to the received notification to be executed. Hereinafter, each element of the portable electronic device 100 will be described in detail.

The communication unit 110 may be implemented in the form of a mobile communication module for supporting a communication function, particularly, a mobile communication function of the portable electronic device 100. This communication unit 110 forms a communication channel with a mobile communication system to thereby support the transmission and reception of signals for the performance of a mobile communication function of the portable electronic device 100. For example, the communication unit 110 may form at least one of a voice service channel, a video service channel and a data service channel with the mobile communication system to support the transmission and reception of predetermined signals corresponding to the service channel.

The communication unit 110 may further receive a communication event from other communication devices or web servers while an application is being executed by a user, or while the portable electronic device 100 is in a locked state. In one example, the communication event may be defined as an event that is input by the communication unit 110, such as a voice receiving signal, a text message receiving signal, an instant message signal, an e-mail receiving signal, and an application update information receiving signal. However, the communication event is not limited to the above description, but may encompass all of signals which are input by the communication unit 110 to be provided in the portable electronic device 100.

The controller 170 may output the notification to a screen of the portable electronic device 100 based on information transmitted from the communication unit 110. Also, when a user executes an application corresponding to the notification, and inputs a text and an image in the executed application, the controller 170 may control the communication unit 110 to transmit the text and the image input by the user to other communication devices or web servers. Alternatively, if an application corresponding to the notification is related to a phone call function, the controller 170 may control the communication unit 110 to allow a user of the portable electronic device 100 to perform the phone call function with a user of another portable electronic device.

The input unit 120 may generate various input signals required for the operation of the portable electronic device 100. The input unit 120 may be configured with various input means such as a keyboard, a keypad and key buttons in accordance with compatibility of the portable electronic device 100. Also, when the display 140 is provided with a touch screen, the input unit 120 may be configured with a touch map displayed on the touch screen. After reception of the notification, the input unit 120 may generate an input signal for executing an application corresponding to the notification, or an input signal for releasing the locked state of the portable electronic device 100. In addition, an application may be executed by touching icons in a screen of the portable electronic device 100 in which applications are displayed in the form of icons as a default function, or a text input function may be performed under the execution of the application. The above-described input signals are transmitted to the controller 170 to be thereby transformed to commands for the performance of a function in accordance with each input signal and then it can be applied.

The audio processing unit 130 may output various audio data that is set up in the course of the operation of the portable electronic device 100, audio data resulting from the reproduction of audio files stored in the storage unit 160, and audio data received from the outside. Also, the audio processing unit 130 may support a collecting function of audio data. In this regard, the audio processing unit 130 may include a speaker (SPK) and a microphone (MIC). When the notification is received, the audio processing unit 130 may support the output of various guide sounds or effect sounds related to an application execution function in accordance with a movement or a rotation of the portable electronic device 100. For example, when portable electronic device 100 is tilted, rotated, or turned over, the audio processing unit 130 may output a guide sound or an effect sound to inform a user of the movement or rotation of portable electronic device 100. This output of the guide sound or the effect sound may be omitted in accordance with a user's preference.

The display 140 provides various image interfaces required for the operation of the portable electronic device 100. For example, the display 140 supports a standby image, a menu image and execution images of applications, which are necessary for the operation of the portable electronic device 100. For example, when an event for a notification output is generated while at least one application is being executed, the display 140 may output a notification in accordance with the event. Also, the controller 170 may control the display 140 to output a notification, while the portable electronic device 100 stays in a locked state by a user's input or due to a non-use of the portable electronic device 100 for a predetermined period. At this time, the controller 170 may output the notification through a pop-up window, or output the notification to a notification bar in a predetermined area of the portable electronic device 100. Afterward, if the operation of the portable electronic device 100 is changed by a user, the controller 170 may output an image for execution of an application corresponding to the notification, by which the user is able to perform a function of the corresponding application.

The display 140 may be implemented in the form of a touch screen that is made by overlapping a display panel and a touch panel. An image and a text corresponding to the application may be displayed in the display panel. The touch panel may define a valid touch area and an invalid touch area in accordance with a characteristic of an image displayed in the display panel, and transmit an event generated in the valid touch area to the controller 170.

The sensor unit 150 may include various sensors. Here, the various sensors may include at least one of an acceleration sensor 151, a gyro-sensor 153 and a geomagnetic sensor 155. These sensors may operate based on a power supplied by the control of the controller 170, and may generate a predetermined signal in accordance with a movement or rotation of the portable electronic device 100. The acceleration sensor 151 detects gravitational acceleration due to a rotation and a movement of the portable electronic device 100. When the portable electronic device 100 stays parallel to the ground, the gravitational acceleration acts toward only the center of the Earth. The generated gravitational acceleration change may be detected by at least one of the acceleration sensor 151, the gyro-sensor 153 and the geomagnetic sensor 155 to be used for detecting a horizontal state of the portable electronic device 100. When portable electronic device 100 is tilted, rotated, or flipped over, at least one of the acceleration sensor 151, the gyro-sensor 153 and the geomagnetic sensor 155 detects the operation and transmits a signal in accordance with the detected movement or rotation of the portable electronic device 100 to controller 170.

The gyro-sensor 153 may sense angular velocity information that is detected in accordance with the rotation of the portable electronic device 100. The detected angular velocity information is transmitted to the controller 170 in real time, and the controller 170 may identify the movement or rotation of the portable electronic device 100 such as a tilt, a rotation, and turning over or flipping of the portable electronic device 100 based on the angular velocity information. Specifically, the controller 170 may analyze the angular velocity information transmitted from the gyro-sensor 153 to identify the change of a rotational angle based on a rotational direction, rotational angular velocity and a measured angular velocity of the portable electronic device 100. The geomagnetic sensor 155 may be selectively activated by the controller 170, and transmit information of all directions in accordance with a compass function to the controller 170.

The storage unit 160 as a secondary memory unit of the controller 170 may include a disk, a RAM and a flash memory. The storage unit 160 may store data generated in the portable electronic device 100 or data received from the external devices, e.g., servers, desk top PCs and tablet PCs, through the communication unit 110 or an external interface unit (not shown). Particularly, the storage unit 160 may store an application list 161 and a change table 163 to store associations between application execution functions and different movements or rotations of the portable electronic device 100. The application list 161 may be a list that stores types of applications applied with the application execution function due to the movement or rotation of the portable electronic device 100. For example, a predetermined instant message application may be applied with the application execution function due to the movement or rotation of the portable electronic device 100, and the function may be applied by a user's setup or a predetermiend design.

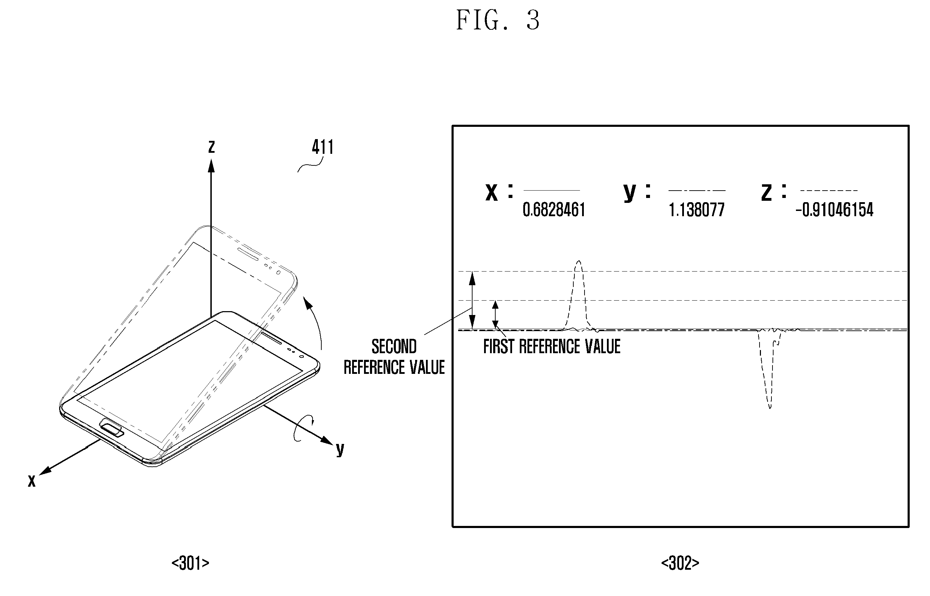

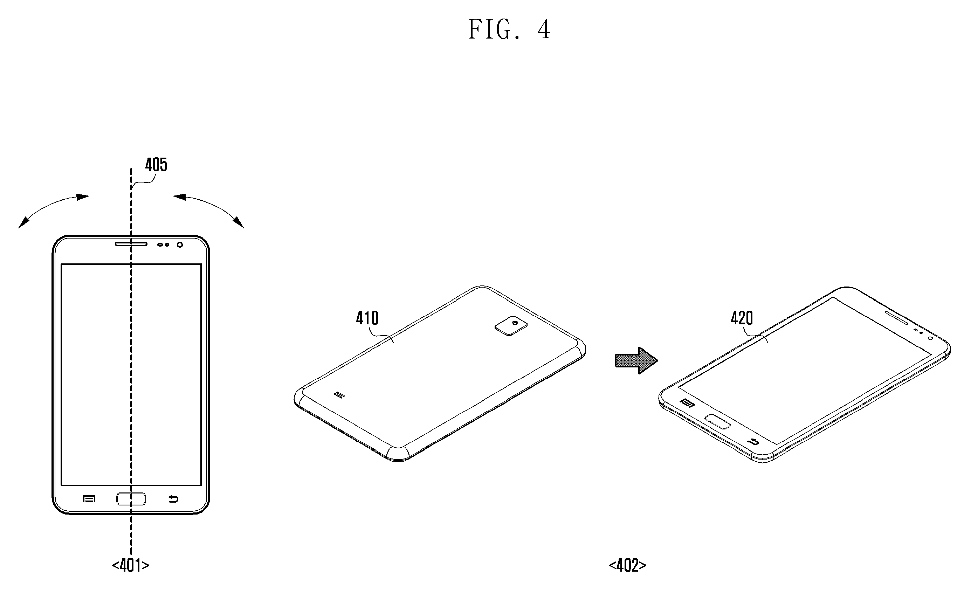

The change table 163 may associate an execution function of an application with information related to the movement or rotation of the portable electronic device 100 received from sensor unit 150. Specifically, the movement or rotation of the portable electronic device 100 that triggers an application may be a tilt, a rotation, or a flip of the portable electronic device 100. The controller 170 may execute an application in accordance with the amount of change and direction of each movement or rotation. The storage unit 160 may store the movement or rotation table to support performances of different functions depending on the movement or rotation of the portable electronic device 100, i.e., the amount of change and a direction of the operation such as a tilt, a rotation and a flip of the portable electronic device 100. The detailed description of the change table 163 will follow later with reference to FIGS. 3 and 4.

Moreover, the storage unit 160 may store an Operating System (OS) for operating the portable electronic device 100, application programs required for optional functions such as, for example, sound reproduction, image or movie reproduction and broadcast reproduction, user data and data transmitted or received during communication. In one example, the storage unit 160 may store application function execution programs in accordance with a movement or rotation of the portable electronic device 100. The application function execution programs may include a routine for controlling controller 170 to receive an event that triggers a notification output, a routine for checking whether the event corresponds to an application stored in the application list 161. Furthermore, the application function execution programs may cause controller 170 to execute a routine for checking the corresponding function by means of the change table 163, and execute a routine for controlling the corresponding application to be executed from the change table 163.

The controller 170 may control general operations of the portable electronic device 100 and signal streams between internal elements of the portable electronic device 100, and process data. Also, the controller 170 may control a power supply from a battery to the internal elements. In addition, the controller 170 may execute various applications stored in program area. The controller 170 may include a timer 171. The timer 171 may generate necessary time data under the control of the controller 170, and the generated time data may be used in a counting operation for a predetermined period of time. Particularly, the timer 171 may start counting after a notification output to the display 140. In addition, when the timer 171 expires without the movement or rotation of the portable electronic device 100 or an execution input of an application through the input unit 120, the controller 170 may control not to perform a function related to the notification, even though an input of the movement or rotation of the portable electronic device 100 is received.

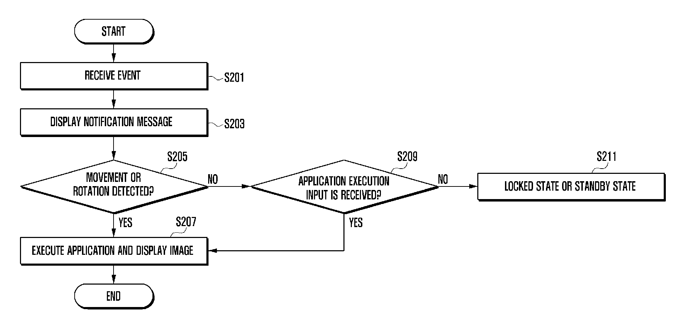

Referring to FIG. 2, a flowchart illustrating an example application execution function is shown. In FIG. 2, the controller 170 may receive an event for a notification output at block 201. For example, the controller 170 may receive a communication event, that is, a voice signal, a text message signal, an instant message signal, an e-mail signal, or an application update signal through communication unit 110. This communication event may be an event related to a phone call function as well as an event related to reception of data. For example, controller 170 may receive information related to a missed call, while the portable electronic device is in a locked state.

The controller 170 may output a notification based on the received event, as shown at block 203. At this time, the controller 170 may output the notification by displaying a pop-up window or an icon in a notification bar. By way of example, assuming an instant message is displayed, the notification may include the sender's name; at least part of the message; a text image for executing the application; a text image for converting from a standby state image to an application execution image; and a text image for closing the notification. Also, the controller 170 may output the notification by means of an icon in a notification bar displayed in a predetermined area of the portable electronic device 100. In this instance, a text included in the notification may be displayed together with the icon. In addition to the output of the notification via the pop-up window or the icon of the notification bar, the controller 170 may output the notification in the form of at least one of audio data, vibration and a light.

At block 205, a movement or rotation of the portable electronic device 100 may be detected. When the notification is output, the controller 170 may execute an application in accordance with a movement or rotation of the portable electronic device 100. In one example, the controller 170 may identify the movement or rotation of the portable electronic device 100, such as titling, rotating, and flipping the portable electronic device 100, based on information detected by at least one of an acceleration sensor 151, a gyro-sensor 153 and a geomagnetic sensor 155 in the sensor unit 150. Hereinafter, collection of the detected information and the movement or rotation of the portable electronic device 100 based on the collected sensing information will be described in detail with reference to FIGS. 3 and 4.

Referring to FIG. 3, an working example of a portable electronic device tilting and an example analysis of angular velocity is shown. In FIG. 3, a picture 301 shows a tilt of the portable electronic device 100 in which a part of the portable electronic device 100 is lifted upward from the horizontal state with respect to the ground, and a picture 302 shows information detected by an acceleration sensor 151, a gyro-sensor 153 and a geomagnetic sensor 155 in accordance with the tilt shown in picture 301. Specifically, the horizontal state of the portable electronic device 100 may be determined with information detected by at least one of the acceleration sensor 151, the gyro-sensor 153 and the geomagnetic sensor 155. That is, when the portable electronic device 100 stays in the horizontal state, a gravitational acceleration acts toward the center of the Earth. The gravitational acceleration detected by at least one of the acceleration sensor 151, the gyro-sensor 153 and the geomagnetic sensor 155 may be transmitted to controller 170. If the direction and the amount of gravitational acceleration has not changed, controller 170 may identify that portable electronic device 100 has remained in the horizontal state. As the portable electronic device 100 rotates with respect to the y-axis, an angular velocity change of a positive or negative value depending on the rotational direction may be detected by the gyro-sensor 153. That is, lifting the portable electronic device 100 as shown in the picture 301 corresponds to a rotation in a counterclockwise direction with respect to the y-axis, which results in a change of a positive value as shown in the left side of the picture 302. Tilting the portable electronic device 100 from the horizontal state illustrated in the picture 301 is intended to prevent any application from being executed due to irregular movements of the portable electronic device 100 (e.g., when a user merely carries the device inside a bag). Accordingly, the tilt of the portable electronic device 100 from the horizontal state is just an example of a tilt of the portable electronic device 100, and does not restrict the scope of the present disclosure. In addition, since the electronic device may temporarily stay in the horizontal state while a user is moving, a period of time may be preconfigured such that an application is executed, when the device stays in the horizontal state for the period of time. The time period may be preconfigured by a user.

In a further example, the application execution function may be set up to be different in accordance with the amount of a tilt. For example, if the change in rotational angular velocity with respect to the y-axis in the picture 302 is equal to or more than a first reference value and less than a second reference value, controller 170 may just output detailed information associated with the notification. In another example, if the change in rotational angular velocity is equal to or more than the second reference value, controller 170 may execute the application associated with the notification. In addition, since the movement or rotation of a device may be continuous, when the change in rotational angular velocity varies between the first and second reference value to a value more than the second reference value, controller 170 may change from just ouputting the detailed information to executing the application in accordance with the cahnge in rotational angular velocity. Application execution functions in accordance with the setup of the first reference value and the second reference value may be stored in change table 163. Table 1 is an example of the corresponding application execution functions stored in the example movement or rotation table.

**[TABLE 1]**

| Amount of movement or rotation of portable electronic device | A first reference value ~ A second reference value | Equal to or more than a second reference value |
|---|---|---|
| types of applications | | |
| Instant message | Display detailed information of instant message | Execute instant message application and output execution image |
| Text message | Display detailed information of text message | Execute text message application and output text list |
| Alarm message | Execute snooze function | Output alarm message setup image and terminate alarm |
| Missed call message | Display detailed information of missed call message | Execute phone call function with caller of missed call message |

The first reference value and the second reference value may be changed in accordance with a user's configuration or a manufacturers configuration. Furthermore, the first reference value may be set up and the second reference value may be omitted.

FIG. 4 illustrates an example of a rotation and a flip of a portable electronic device in accordance with aspects of the present disclosure. In FIG. 4, a picture 401 illustrates a rotation of a portable electronic device 100 to the left or right, and picture 402 illustrates the portable electronic device 100 being flipped. As noted above, the amount of a movement or rotation of the portable electronic device 100 may be detected using at least one of the acceleration sensor 151, the gyro-sensor 153 and the geomagnetic sensor 155.

The rotation in picture 401 may be preconfigured such that a left rotation with respect to a central axis corresponds to the first reference value and a right rotation corresponds to the second reference value. For example, after a notification of an instant message application is received, if the portable electronic device 100 is rotated to the left, the change table 163 may be set up to output detailed information of an instant message. In another example, if the portable electronic device 100 is rotated to the right, the change table 163 may be set up to execute the instant message application and output the executed image. Alternatively, both the left and right rotation of the portable electronic device 100 may correspond to the first reference value. As described above, the performance of a function in accordance with the left rotation or the right rotation of the portable electronic device 100 is only an example of the present disclosure, and does not restrict the scope of the present disclosure.

In picture 402, portable electronic device 100 is shown being flipped. In this instance, back surface 410 of portable electronic device 100 faces one direction (e.g., up) in the left drawing of picture 402. A flip of the device may cause the front surface 420 of the device to face the one direction (e.g., up) and the back surface 410 to face the opposite direction (e.g., down), as shown in the right drawing of picture 402. Upon sensing the flip, controller 170 may execute a corresponding application function. On the contrary, when another flip causes the the back surface 410 of the portable electronic device 100 to face up again and the front surface 420 of the portable electronic device 100 to face down, controller 170 may preclude an application function from executing. For example, after a notification of a text message application is received, if portable electronic device 100 is flipped such that back surface 410 faces down and front surface 420 faces up, the text message corresponding to the notification may be output. Conversely, if a flip causes front surface 420 to face down again and back surface 410 to face up, an application execution function may be precluded.

Returning to block 205 in FIG. 2, if a movement or rotation of portable electronic device 100 is detected, controller 170 may execute an application corresponding to the notification such that the application image is shown on display 140 at block 207. Here, the execution and display of the application may include the examples described in Table 1. For example, incase of a missed call, the execution and display of the application may comprise detailed information of the missed call and execution of a return phone call.

In another example, if no movement or rotation is detected at block 205, controller 170 may detect whether an input event for application execution is received at block 209. For example, after notification is output via a pop-up window on display 140, a user may touch the pop-up window to execute an application. Alternatively, if a predetermined key is pressed, an application corresponding to the notification may be executed. When controller 170 receives a touch input or a key input in the pop-up window, controller 170 may execute the application corresponding to the notification and display the executed image. On the contrary, if it is determined that controller 170 does not receive the application execution input, a locked state or a standby image may be output at block 211. In a further example, block 209 may be omitted such that a locked state or a standby image may be output at block 211 if no movement or rotation is detected.

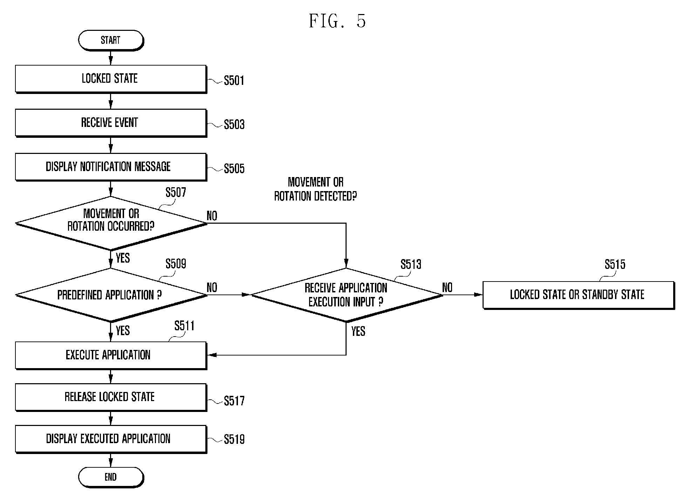

FIG. 5 is a flowchart illustrating an application execution function of the portable electronic device in accordance with aspects of the present disclosure. Hereinafter, the same process in FIG. 5 as that in FIG. 2 will be simply described, but a detailed description will focus on the differences between them.

Referring to FIG. 5, at block 501, portable electronic device 100 may be in a locked state. Portable electronic device 100 may be in the locked state due to not receiving a touch input or a key input for a preset period of time or due to a user command. In the locked state, controller 170 may process a received input to be invalid unless the input is detected in a predetermined area of display 140 with a predetermined key input.

At block 503, controller 170 may receive an event for a notification output and controller 170 may output a notification based on the received event at block 505. At block 507, controller 170 may detect whether a movement or rotation of portable electronic device 100 has occured.

If a movement or rotation has occured at block 507, it may be determined whether an application corresponds to the notification at block 509. In one example, an application execution function may support predetermined applications. That is, the application list 161 of storage unit 160 may store predetermined applications that may be executed. When the movement or rotation of portable electronic device 100 is detected, controller 170 may determine whether an application corresponding to the notification is contained in application list 161. If so, it may execute the application at block 511. A user may store applications associated with notifications in application list 161.

At block 507, when controller 170 does not detect a movement or rotation of portable electronic device 100 or when the application associated with the notification is not contained in application list 161, controller 170 may detect whether an application execution input is received at block 513. When controller 170 determines that the application execution input is not received at block 513, controller 170 may allow the locked state to continue at block 515.

When controller 170 determines that the application associated with the notification corresponds to a predefined application at block 509 or when the application execution input is received at block 513, controller 170 may execute the application associated with the notification at block 511. If the locked state is maintained at block 515, controller 170 may preclude execution of the application. This prevents execution that is not desired by a user.

In another example, a user may release the locked state of portable electronic device 100 at block 517. Release of the locak may be achieved by a password input, a predetermined pattern input or a touch input in a predetermined area in accordance with a user's preference.

At block 519, controller 170 may execute the application associated with the notification, when the locked state of portable electronic device 100 is released at block 517.

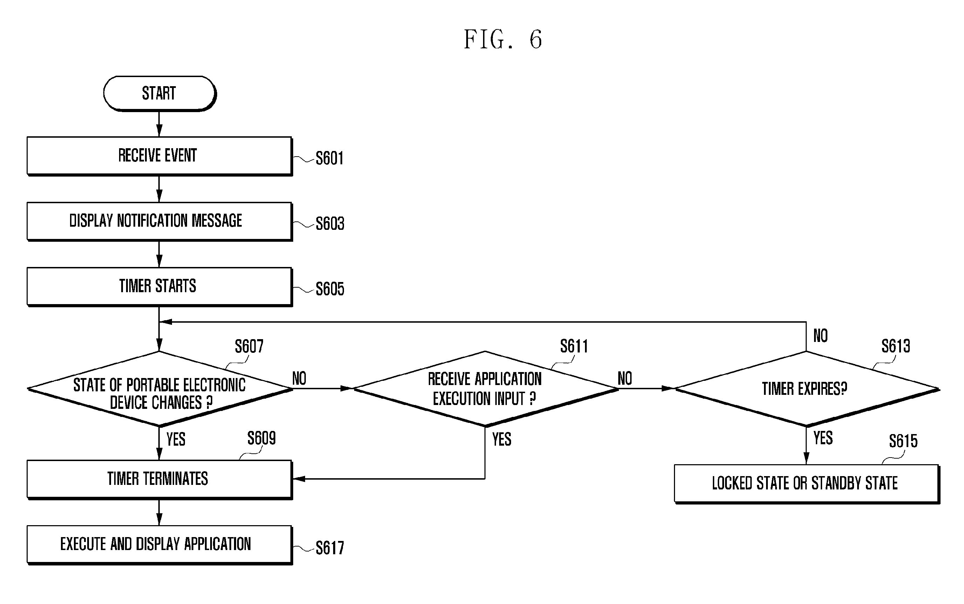

FIG. 6 is a flowchart illustrating an application execution function of a portable electronic device in accordance with aspects of the present disclosure. Hereinafter, the same process in FIG. 6 as that in FIG. 2 will be simply described, but a detailed description will focus on the differences between them

Referring to FIG. 6, the controller 170 receives an event for a notification output at block 601, and the controller 170 may output a notification based on the received event for a notification output at block 603.

At block 605, controller 170 may instruct timer 171 to start. Timer 171 may prevent an application from being executed after a predetermined time period expires without detecting a movement, rotation, or user input.

When controller 170 detects a movement or rotation at block 607, it may immediately terminate timer 171 at block 609. In addition, controller 170 may detect whether an application execution input is received at block 611. When the application execution input is received, controller 170 may also terminate timer 171 at block 609.

When controller 170 detects no application input at block 611, controller 170 may determine whether timer 171 expires at block 613. That is, if the operation of portable electronic device 100 is not changed and the input is not received within the period of time predefined by timer 171, controller 170 may lock portable electronic device 100 or change it to a standby mode at block 615.

When timer 171 expires at block 609, an application associated with the notification may be executed at block 617.

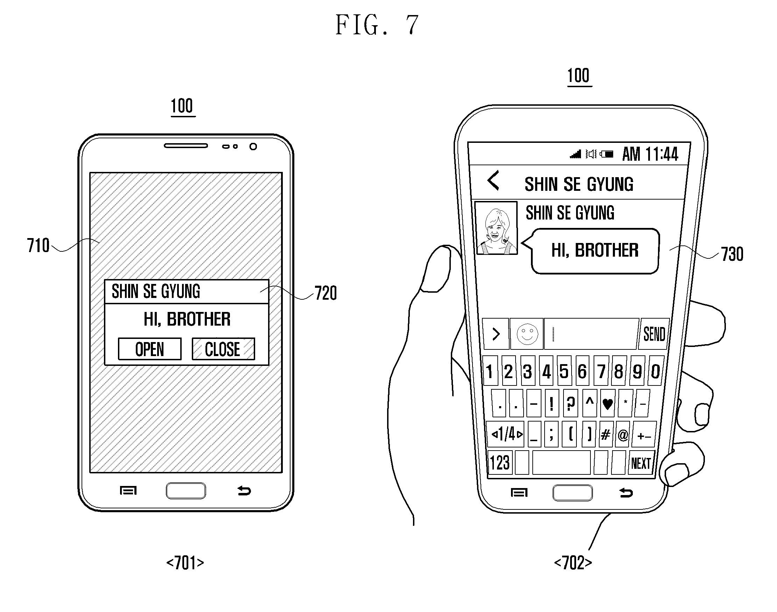

Referring to FIG. 7, an example execution function is shown. In FIG. 7, a picture 701 shows controller 170 receiving an event and outputting a notification associated with an instant message via image 710. The notification may be output while portable electronic device 100 is in a locked state. In the picture 701, the notification may include a sender name, the message and an input image via pop-up window 720. Although the output notification is displayed while the device is locked, it is understood that the present disclosure is not limited to this configuration. That is, the notification may be output via an icon, a notification bar, a standby image, or other applications. Also, the notification may be audio data, vibration or a light.

In a further example, a picture 702 shows an execution image of an instant message application, when a movement or rotation of the device is detected. Picture 702 shows an image that is output by a user gripping portable electronic device 100 and lifting the portable electronic device 100 from the horizontal state. However, it is understood that this is merely a working example and that the movement or rotation of the device may include, but is not limited to, rotating the device to the left or right, flipping the device, and tilting the device as described above.

The output image of the instant message application of picture 702 may include, but is not limited to, a chat window with a sender. The controller 170 may display a sender name, message content, an outgoing message input field, a touch keypad for typing an outgoing message, and a sender's image in the chat window.

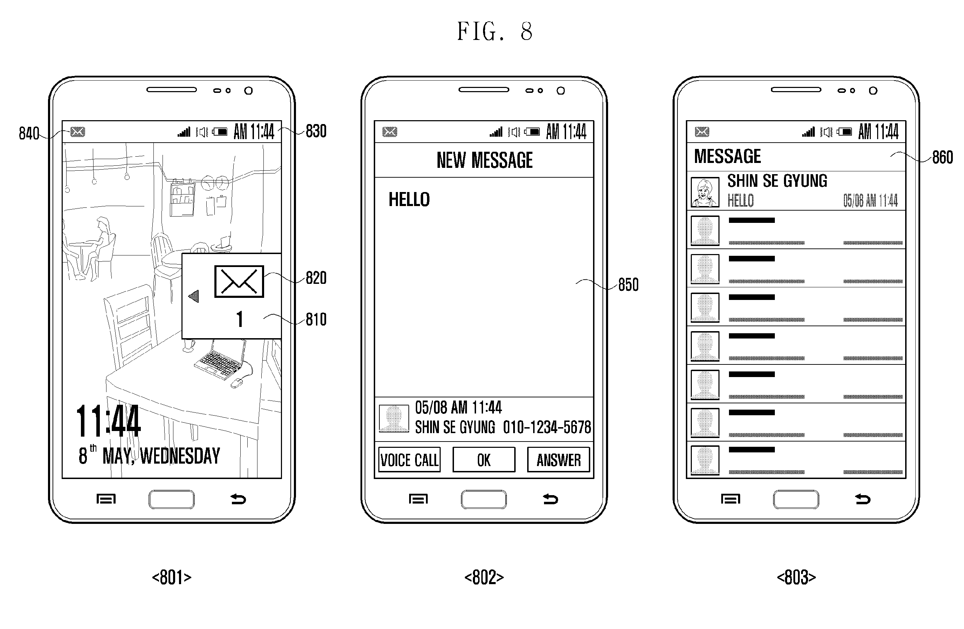

FIG. 8 illustrates an example of an application execution function in accordance with aspects of the present disclosure. In FIG. 8, a picture 801 shows an image in which controller 170 receives an event for a text message application and then a notification is displayed while the portable electronic device 100 is locked. As shown in the picture 801, the notification may be displayed in the form of an icon 820 in a pop-up window 810 or an icon 840 in a notification bar 830. Pictures 802 and 803 show an execution image of a text message application, when a movement or rotation of the device is detected. In one example, when a user lifts the portable electronic device 100, a different application execution image may be displayed in accordance with an amount the device is lifted. That is, if the change in rotational angular velocity of the portable electronic device 100 is between the first reference value and the second reference value, controller 170 may display the application execution image of the picture 802. In another example, if the change in rotational angular velocity of the portable electronic device 100 is equal to or more than the second reference value, controller 170 may check the change table 163 and convert the image from the picture 802 to the picture 803. The detailed description of the operation has been set forth before, so a repeated description will be omitted.

The picture 802 shows an image that displays detailed information of the received text message. In one example, the content of a text message may be displayed in one area of a text message window 850, and a sender's image, receipt time, a sender name and the telephone number of a sender may be displayed in another area in the picture 802. The picture 803 shows an image that displays a text message list 860. The text message list 860 may include text messages which have been received before and may be arranged in conjunction with the received text message. Thus, different applications may be executed in accordance with the amount of movement or rotation detected.

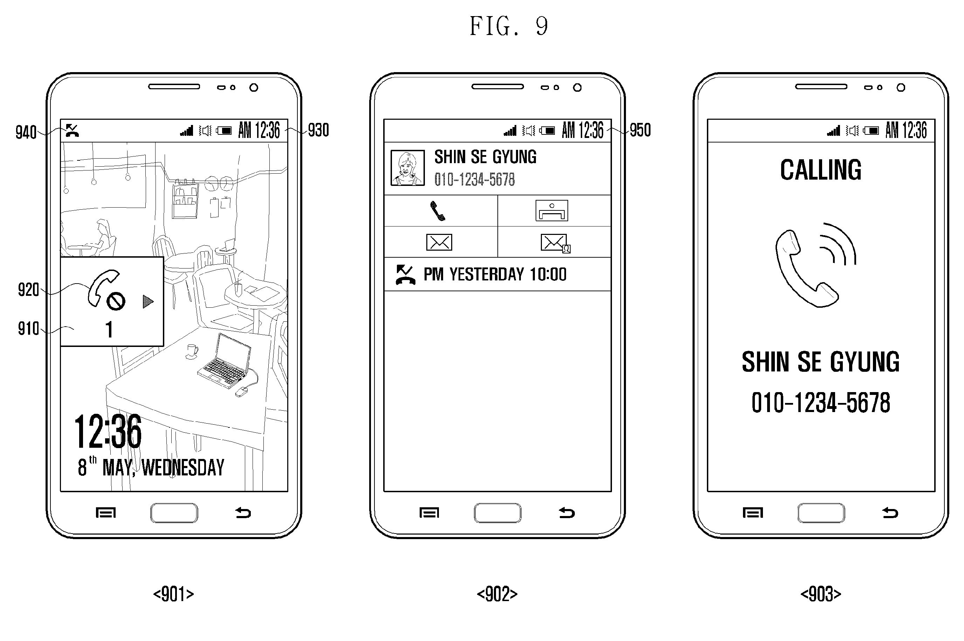

Referring to FIG. 9, an example execution function in accordance with aspects of the present disclosure is shown. In FIG. 9, a picture 901 shows a missed call notification while portable electronic device 100 is locked. As shown in the picture 901, the notification may be displayed in the form of an icon 920 in a pop-up window 910 or an icon 940 in a notification bar 930. Pictures 902 and 903 show an execution image of a missed call message application, a movement or rotation of the device is detected. In one example when a user lifts the portable electronic device 100, a different application execution may be in accordance with an amount the portable electronic device 100 was lifted. That is, if the change in rotational angular velocity of portable electronic device 100 is between the first reference value and the second reference value, controller 170 may display an image including basic information 950 of the missed call as shown in picture 902. Also, if the change in rotational angular velocity is more than the second reference value, controller 170 may return the missed call as shown in picture 903. As described above, in FIG. 9, the movement or rotation of the portable electronic device 100 may include rotating, flipping, or tilting portable electronic device 100.

Advantageously, the method and apparatus disclosed herein may allow a user to simply and easily execute applications upon the receipt of a notification associated therewith. Thus, the techniques disclosed herein may be more convenient and efficient for users than conventional navigational techniques. In turn, users may be provided with a better user experience.

The above-described examples of the present disclosure can be implemented in hardware, firmware or via the execution of software or computer code that can be stored in a non-transitory machine readable medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The functions and process steps herein may be performed automatically or wholly or partially in response to user command. An activity (including a step) performed automatically is performed in response to executable instruction or device operation without user direct initiation of the activity. The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se. The method and device disclosed herein are not limited to the above-described embodiments and it is understood that they may be modified and implemented without departing from the spirit and scope of the present disclosure.

## Claims

1. A method comprising:
outputting a notification associated with an application in a portable electronic device;
detecting a movement or a rotation of the portable electronic device; and
when the movement or the rotation of the portable electronic device is detected, executing the application associated with the notification in response to the movement or the rotation of the portable electronic device.

2. The method of claim 1, wherein the notification is output in response to a received event comprising at least one of a text message receiving signal, an instant message receiving signal, an alarm receiving signal and a missed call receiving signal.

3. The method of claim 1, wherein the notification comprises a pop-up window, a notification bar, audio data, vibration, or a light.

4. The method of claim 1, wherein detecting the movement or the rotation of the portable electronic device comprises:
detecting a tilt of at least a portion of the portable electronic device;
detecting a rotation of the portable electronic device to a left or a right direction with respect to a symmetrical axis of the portable electronic device; and
detecting a turn of the portable electronic device from a state in which a back surface of the device faces one direction to a state in which a front surface of the device faces the one direction.

5. The method of claim 4, further comprising:
detecting whether a change in angular velocity caused by the tilt of the portable electronic device is more than a first reference value;
outputting detailed information associated with the notification, when the change in the angular velocity caused by the tilt is greater than or equal to the first reference value and less than a second reference value; and
executing the application, when the change in the angular velocity caused by the tilt is greater than or equal to the second reference value.

6. The method of claim 1, wherein executing the application further comprises:
determining whether the application is predefined; and
executing the application, when the application is predefined.

7. The method of claim 1, further comprising:
detecting whether the movement or the rotation of the portable electronic device has occurred for a predetermined period of time; and
executing the application, when the movement or the rotation of the portable electronic device has occurred for the predetermined period of time.

8. The method of claim 1, further comprising:
releasing a locked state of the portable electronic device, when the movement or the rotation of the portable electronic device is detected and the electronic device is in the locked state.

9. A portable electronic device comprising:
a sensor unit;
a display unit; and
a controller configured to:
control the display unit output a notification associated with an application in the portable electronic device;
detect with the sensor unit a movement or a rotation of the portable electronic device; and
execute the application associated with the notification in response to the movement or the rotation of the portable electronic device, when the movement or the rotation of the portable electronic device is detected.

10. The portable electronic device of claim 9, wherein the controller is configured to control the display unit to output the notification in response to a received event comprising at least one of a text message receiving signal, an instant message receiving signal, an alarm receiving signal and a missed call receiving signal.

11. The portable electronic device of claim 9, wherein the notification comprises a pop-up window, a notification bar, audio data by an audio processing unit, vibration by a haptic module, or a light.

12. The portable electronic device of claim 9, wherein the controller is further configured to:
detect a tilt of at least a portion of the portable electronic device;
detect a rotation of the portable electronic device to a left or a right direction with respect to a symmetrical axis of the portable electronic device;
and
detect a turn of the portable electronic device from a state in which a back surface of the device faces one direction to a state in which a front surface of the device faces the one direction.

13. The portable electronic device of claim 12, wherein the controller is further configured to:
detect whether a change in angular velocity caused by the tilt of the portable electronic device is more than a first reference value;
control the display unit to output detailed associated with the notification using the display unit, when the change in the angular velocity caused by the tilt is greater than or equal to the first reference value and less than a second reference value; and
execute the application, when the change in the angular velocity caused by the tilt is greater than or equal to the second reference value.

14. The portable electronic device of claim 9, wherein the controller is further configured to identify whether the application is predefined and execute the application, when the application is predefined.

15. The portable electronic device of claim 9, wherein the controller is further configured to detect whether the movement or the rotation of the portable electronic device has occurred for a predetermined period of time and execute the application, when the movement or the rotation of the portable electronic device has occurred for the predetermined period of time.
